(19) **Europäisches Patentamt**

**European Patent Office**

**Office européen des brevets**

(11) **EP 0 994 597 B1**

(12) **EUROPEAN PATENT SPECIFICATION**

(45) Date of publication and mention
of the grant of the patent:
**02.01.2003 Bulletin 2003/01**

(51) Int Cl.⁷: $H04L\ 1/20$

(21) Application number: **98308339.5**

(22) Date of filing: **13.10.1998**

(54) **Method for adaptively estimating reception quality**

Verfahren zur adaptiven Schätzung der Empfangsqualität

Procédé d'estimation adaptive de qualité de réception

(84) Designated Contracting States:
**DE FR GB IT**

(43) Date of publication of application:
**19.04.2000 Bulletin 2000/16**

(73) Proprietor: **LUCENT TECHNOLOGIES INC.**
**Murray Hill, New Jersey 07974-0636 (US)**

(72) Inventor: **Kuczynski. Peter, Dr.**
**90491 Nuremberg (DE)**

(74) Representative: **Williams, David John et al**
**Lucent Technologies UK Limited,**
**5 Mornington Road**
**Woodford Green, Essex IG8 0TU (GB)**

(56) References cited:
**EP-A- 0 722 226     US-A- 5 418 789**
**US-A- 5 586 143     US-A- 5 615 412**
**US-A- 5 751 767**

**Description**

**TECHNICAL FIELD**

The present invention relates generally to the field of estimating reception quality and particularly to a method of adaptively estimating the reception quality for a signal transmitted over a transmission channel.

**BACKGROUND OF THE INVENTION**

In radio communications systems, e. g. digital cellular radio systems according to the Global System for Mobile communications (GSM), an estimation of the reception quality for a signal transmitted over the radio channel is used for many purposes. One example is the use of the reception quality in algorithms which are provided for deciding on handovers as described e g. in "The GSM System for Mobile Communications" by M. Mouly and M.B. Pautet, Palaiseau, 1992. The reception quality estimation (Qual) is based on the Bit Error Rate (BER) estimates derived in the system by Mobile Stations (MS) and Base Transceiver Stations (BTS) as a part of channel equalisation or decoding process. Such prior art is disclosed for example in US 5 586 143. Usually Qual is reported within a reporting period of 480 ms via the Slow Associated Control CHannel (SACCH) by the MS. As the Qual value is available only every 480 ms, and as due to the nature of the transmission channel, which is influenced by a significant level of noise, i. e. statistical variations, fading, interference etc., the Qual values need to be averaged during the reporting period.

As the transmission conditions on the transmission channel may vary strongly due to their statistical nature, for many cases, e. g. more advanced techniques like voice transmission with an adaptive data rate, known as Adaptive Multi Rate (AMR), or packet data transmission having an adaptive data rate, known as General Packet Radio Service (GPRS), the simple averaging over a fixed period of time of the Qual values is not sufficient in order to provide a satisfactory estimate for the reception quality.

**SUMMARY OF THE INVENTION**

Accordingly, it is an object of the present invention to provide a method of adaptively estimating reception quality and particularly a method of adaptively estimating the reception quality for a signal transmitted over a transmission channel. It is the aim of the inventive method under consideration to avoid the drawbacks known from the state of the art.

The object is achieved by providing a method of adaptively estimating reception quality for a signal transmitted over a transmission channel, having steps of

estimating said reception quality,
determining an actual bit error rate by using a known bit sequence,
determining an error value for an estimation error of said estimated reception quality by comparing said estimated reception quality to said actual bit error rate,
adjusting an adaptive filter means in accordance with said determined error value,
and filtering said estimated reception quality with said adjusted adaptive filter means.

It is an advantage of the present invention, that it allows to provide an estimate for reception quality of a signal transmitted over a transmission channel which is adapted to the transmission channel used for transmission of the signal. It is thus possible to provide an enhanced bit error rate estimate which is optimised with regard to the transmission conditions.

The present invention will become more fully understood from the detailed description given hereinafter and further scope of applicability of the present invention will become apparent.

**BRIEF DESCRIPTION OF THE DRAWINGS**

The following detailed description is accompanied by drawings of which

Fig. 1    is a representation of adaptively estimating reception quality in principal according to this invention, and

Fig. 2    is a flow chart of a method of adaptively estimating reception quality according to this invention.

**DETAILED DESCRIPTION**

Following the invention will be explained for a GSM system. To those skilled in the art it is obvious that the present invention also is applicable to other wireless systems.

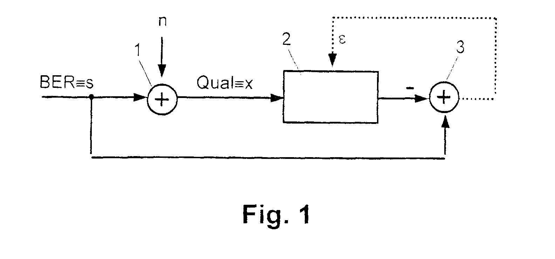

Depicted in Fig. 1 is a representation of adaptively estimating reception quality in principal. An actual bit error rate BER is modelled as a stochastic process and abbreviated with s. An estimated reception quality Qual consists of the bit error rate s disturbed by a noise sequence n representing the estimation error. In Fig. 1 an adder 1 adds the noise signal n to the actual bit error rate s forming the estimated reception quality signal x. The signal x is coupled to an adaptive filter 2 which is used to filter signal x according to the actual bit error rate s. To adjust the adaptive filter 2 the output signal of the adaptive filter 2 is coupled to an adder 3 and is subtracted form the actual bit error rate s. The output signal ε of the adder 3. which represents the error of the estimated reception quality signal x compared to the actual bit error rate s is used to adjust the adaptive filter 2 in order to minimise the mean squared error of the estimate, by using the error signal which is available at the output of filter 2.

The adaptive filter 2 can be formed by a linear Finite Response Filter (FIR) defined by a set of coefficients

$$(1) \qquad w[k], \qquad k \in [L,K]$$

With the abbreviations as defined above for the actual bit error rate BER and the estimated reception quality Qual it is

$$(2a) \qquad BER \equiv s,$$

and

$$(2b) \qquad Qual \equiv x$$

As will be explained below, the value of the estimated reception quality x is equivalent to the actual bit error rate s plus an error n

$$(3) \qquad x[m] = s[m] + n[m]$$

with m being a discrete time variable. The impulse response of the linear filter 2, as defined in equation (1) by its coefficients, is then chosen in order to minimise the resulting error ε according to the least mean square method, i.e.

$$(4) \qquad \text{Minimise } \varepsilon^2 \text{ with subject to } w[k]$$

where

$$(5) \qquad \varepsilon^2 = \sum_{m \in I} \left( s[m] - \hat{x}[m] \right)^2$$

and

$$(6) \qquad \hat{x}[m] = \sum_{k=L}^{K} w[k] \cdot x[m-k]$$

with I being a group of samples for which the mean value is built. K and L may be chosen in a way to get a causal or a non causal solution of equation (6). The system of linear equations resulting from equations (1) to (6) is

$$(7) \qquad r_{SX}[k] = \sum_{j=K}^{L} w[j] R_{XX}[k-j], \quad k \in [K.L]$$

where $r_{SX}[k]$ and $R_{XX}[k-j]$ represent the cross and autocorrelation functions of s and x. This system of linear equations can be solved e. g. by direct matrix inversion, or by using a known algorithm like least mean square algorithm (LMS) or recursive least squares algorithm (RLS).

The solution for the vector of coefficients **w** is using the direct matrix inversion method is:

$$(8) \qquad w = R^{-1}_{xx} \cdot r_{sx}$$

with $\mathbf{R^{-1}_{xx}}$ being the inverted auto-correlation matrix of x and $\mathbf{r_{sx}}$ being the cross-correlation vector of s and x.

By choosing different values for K and L the adaptive filter 2 can represent a causal or non causal form, by applying symmetry constraints with regard to the time origin the filter function can be symmetric or non symmetric in the time domain. It can have a variable filter length in order to improve the filter quality. In addition a weighting function multiplied with the filter coefficients can be used. For greater detail and a better understanding of adaptive filter theory "Adaptive Filter Theory", by Simon Haykin. Prentice Hall, 1986, is incorporated by reference.

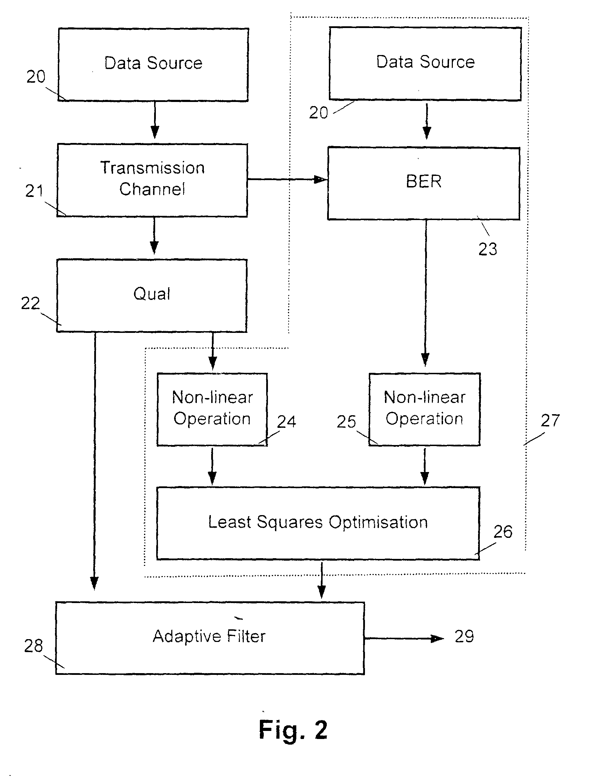

Following a method of adaptively estimating reception quality will be explained with reference to Fig. 2 which is a flow chart of a method of adaptively estimating reception quality according to this invention and shows the principal realisation of the adaptive estimation scheme in a wireless communication system. Fig. 2 shows a data source 20 which generates a known bit sequence. The known sequence of data source 20 is transmitted over a transmission channel 21. As the sequence of data produced by data source 20 known it is available on both sides of the transmission channel 21. Therefore, two data source 20 on both sides of the transmission channel 21 are shown. After transmission the quality of the received signal Qual is estimated 22. At the same time the actual bit error rate BER is calculated 23 by utilising the fact that a known bit sequence is generated by data source 20. Both the estimated reception quality Qual and the actual bit error rate BER are pre-processed firstly by using operations 24 and 25 in order to align the dynamic range of the stochastic variables and remove non-linear effects. For this purpose operations 24 and 25 can be e. g. logarithmic operations. The linearised and aligned values of Qual and BER are used in a way as explained above for linear optimisation 26, e. g. least squares optimisation, to adjust a set of coefficients of a filter 28. By adjusting the filter coefficients according to the result of the linear optimisation 26 an adaptive filter 28 is formed which is used to adaptively filter the reception quality estimate Qual of the estimation step 22. In that way the quality of the estimated and filtered value as available at output 29 of the filter 28 is improved, as it is adjusted to the actual transmission conditions on the transmission channel 21 used for transmitting the signal. Actual transmission conditions can vary e. g. with regard to the speed of the MS. The system can adapt then the filtering function to be an averaging function with a lower averaging time compared e. g. to the averaging time used for non moving MS.

As explained above, for calculating the actual bit error rate BER, a known bit sequence is necessary. Therefore, for adaptively filtering the estimated reception quality Qual. data source 20 has to provide a known bit sequence either when the system is installed to adjust the adaptive filter 28 according to the transmission channel, or the data source 20 has to provide the known bit sequence continuously or regularly within certain periods of time. After the adaptation of filter 28 a constant filter function, i. e. a fixed set of filter coefficients, can be applied to filter the estimated Qual values of step 22. In this case the components encircled by dashed line 27 do not have to be operative.

In a GSM system e. g. the silence descriptor frames (SID frames) sent and provided at discontinuous transmission (DTX) can be used as reference signals to generate the BER values as they contain known data symbols.

**Claims**

1.   A method of adaptively estimating reception quality for a signal transmitted over a transmission channel, having steps of

•    estimating said reception quality,
•    determining an actual bit error rate for the received signal by using a known bit sequence,
•    determining an error value for an estimation error of said estimated reception quality by comparing said estimated reception quality to said actual bit error rate,
- adjusting an adaptive filter means in accordance with said determined error value, and
- filtering said estimated reception quality with said adjusted adaptive filter means.

**2.** A method according to claim 1,
**characterised in, that**
said estimated reception quality and said bit error rate are linearised.

**3.** A method according to claim 2,
**characterised in, that**
for said linearisation a logarithm of said estimated reception quality and said bit error rate is formed.

**4.** A method according to one of the claims 1 to 3,
**characterised in, that** said steps of determining said error value and adjusting said adaptive filter means in accordance with said determined error value, is effected by linear optimisation.

**5.** A method according to claim 4,
**characterized in, that**
said linear optimisation is achieved by least mean square optimisation.

**6.** A method according to one of the claims 1 to 5,
**characterised in, that**
said steps of determining said actual bit error rate and determining said error value and adjusting said adaptive filter means in accordance with said determined error value is effected only once.

**7.** A method according to one of the claims 1 to 5,
**characterised in, that**
said steps of determining said actual bit error rate and determining said error value and adjusting said adaptive filter means in accordance with said determined error value is effected on a regular basis.

**8.** A method according to one of the claims 1 to 7,
**characterized in, that**
said transmission channel is a radio channel.

**9.** A method according to claim 8,
**characterised in, that**
said radio channel is a transmission channel in a GSM system.

**Patentansprüche**

**1.** Verfahren zum adaptiven Abschätzen der Empfangsqualität für ein über einen Übertragungskanal übertragenes Signal, mit den folgenden Schritten:

- Abschätzen der Empfangsqualität;
- Bestimmen einer tatsächlichen Bitfehlerrate für das empfangene Signal durch Verwendung einer bekannten Bitsequenz;
- Bestimmen eines Fehlerwerts für einen Abschätzungsfehler der abgeschätzten Empfangsqualität durch Vergleichen der abgeschätzten Empfangsqualität mit der tatsächlichen Bitfehlerrate;
- Einstellen eines adaptiven Filtermittels gemäß dem vorbestimmten Fehlerwert und
- Filtern der abgeschätzten Empfangsqualität mit dem eingestellten adaptiven Filtermittel.

**2.** Verfahren nach Anspruch 1,
**dadurch gekennzeichnet, daß**
die abgeschätzte Empfangsqualität und die Bitfehlerrate linearisiert werden.

**3.** Verfahren nach Anspruch 2,
**dadurch gekennzeichnet, daß**

für die Linearisierung ein Logarithmus der abgeschätzten Empfangsqualität und der Bitfehlerrate gebildet wird.

4. Verfahren nach einem der Ansprüche 1 bis 3,
   **dadurch gekennzeichnet, daß**
   die Schritte des Bestimmens des Fehlerwerts und des Einstellens des adaptiven Filtermittels gemäß dem bestimmten Fehlerwert durch lineare Optimierung bewirkt werden.

5. Verfahren nach Anspruch 4,
   **dadurch gekennzeichnet, daß**
   die lineare Optimierung durch Least-Mean-Square-Optimierung erzielt wird.

6. Verfahren nach einem der Ansprüche 1 bis 5,
   **dadurch gekennzeichnet, daß**
   die Schritte des Bestimmens der tatsächlichen Bitfehlerrate und des Bestimmens des Fehlerwerts und des Einstellens des adaptiven Filtermittels gemäß dem bestimmten Fehlerwert nur einmal bewirkt werden.

7. Verfahren nach einem der Ansprüche 1 bis 5,
   **dadurch gekennzeichnet, daß**
   die Schritte des Bestimmens der tatsächlichen Bitfehlerrate und des Bestimmens des Fehlerwerts und des Einstellens des adaptiven Filtermittels gemäß dem bestimmten Fehlerwert regelmäßig bewirkt werden.

8. Verfahren nach einem der Ansprüche 1 bis 7,
   **dadurch gekennzeichnet, daß**
   der Übertragungskanal ein Funkkanal ist.

9. Verfahren nach Anspruch 8,
   **dadurch gekennzeichnet, daß**
   der Funkkanal ein Übertragungskanal in einem GSM-System ist.

**Revendications**

1. Procédé d'estimation adaptative de la qualité de réception d'un signal émis sur un canal d'émission, ayant des étapes

   • d'estimation de ladite qualité de réception,
   • de détermination d'un taux d'erreurs sur les bits effectif du signal reçu en utilisant une séquence binaire connue,
   • de détermination d'une valeur d'erreur d'une erreur d'estimation de ladite qualité de réception estimée en comparant ladite qualité de réception estimée audit taux d'erreurs sur les bits effectif,
   • de réglage d'un moyen de filtre adaptatif en fonction de ladite valeur d'erreur déterminée, et
   • de filtrage de ladite qualité de réception estimée avec ledit moyen de filtre adaptatif réglé.

2. Procédé selon la revendication 1,
   **caractérisé en ce que**
   ladite qualité de réception estimée et ledit taux d'erreurs sur les bits sont linéarisés.

3. Procédé selon la revendication 2,
   **caractérisé en ce que**
   pour ladite linéarisation, un logarithme de ladite qualité de réception estimée et dudit taux d'erreurs sur les bits est formé.

4. Procédé selon l'un quelconque des revendications 1 à 3,
   **caractérisé en ce que**
   lesdites étapes de détermination de ladite valeur d'erreur et de réglage dudit moyen de filtre adaptatif conformément à ladite valeur d'erreur déterminée, sont effectuées par optimisation linéaire.

5. Procédé selon la revendication 4,
   **caractérisé en ce que**

ladite optimisation linéaire est réalisée par optimisation par les moindres carrés moyens.

6. Procédé selon l'une quelconque des revendications 1 à 5,
   **caractérisé en ce que**
   lesdites étapes de détermination dudit taux d'erreurs sur les bits effectif et de détermination de ladite valeur d'erreur et de réglage dudit moyen de filtre adaptatif en fonction de ladite valeur d'erreur déterminée sont effectuées une seule fois.

7. Procédé selon l'une quelconque des revendications 1 à 5,
   **caractérisé en ce que**
   lesdites étapes de détermination dudit taux d'erreurs sur les bits effectif et de détermination de ladite valeur d'erreur et de réglage dudit moyen de filtre adaptatif en fonction de ladite valeur d'erreur déterminée sont effectuées de façon régulière.

8. Procédé selon l'une quelconque des revendications 1 à 7,
   **caractérisé en ce que**
   ledit canal d'émission est un canal radio.

9. Procédé selon la revendication 8,
   **caractérisé en ce que**
   ledit canal radio est un canal d'émission dans un système GSM.

Fig. 1

**Fig. 2**